# EUROPEAN PATENT APPLICATION

(11) **EP 4 800 265 A1**
(43) Date of publication of application: **02.09.2026**
(21) Application number: 25305249.2
(22) Date of filing: 26.02.2025
(51) Int. Cl.: F16H 25/24, B64C 25/24, F16H 35/00, F16H 25/22, F16H 25/20

(54) **LINEAR ACTUATOR COMPRISING A LOCKING ELEMENT**

(71) Applicant: Goodrich Actuation Systems SAS, 27950 Saint-Marcel (FR)
(72) Inventor: POTIER, Karl, Vernon, 27950 (FR); MEDINA, Raphael, Vernon, 27950 (FR)
(74) Representative: Casalonga

(57) **Abstract**

There is provided a linear actuator (10) comprising: an output rod (20) having a longitudinal axis (22) and a distal end (11); a structure (26) comprising a friction surface (28) radially spaced from the output rod (20), wherein the output rod (20) is configured for extension and retraction in an axial direction relative to the structure (26); an input rod (18) for driving movement of the output rod (20), wherein the input rod (18) is axially moveable relative to the output rod (20); and a locking element (30; 48). The locking element (30; 48) comprises: a brake portion (32; 50) arranged between the friction surface (28) and the output rod (20); and an inclined surface (26; 54). The locking element (30; 48) is axially moveable relative to the output rod (20), wherein when the input rod (18) is moved in a first axial direction (D1; D2) relative to the structure (26), the input rod (18) contacts the locking element (30; 48) so as to drive the output rod (20) in the first axial direction (D1; D2), and wherein when an external load acts on the distal end (11) of the output rod (20) in the first axial direction (D1; D2), an engagement feature (40; 58) of the output rod (20) is pushed against the inclined surface (26; 54) of the locking element (30; 48) so as to wedge the brake portion (32; 50) of the locking element (30; 48) against the friction surface (26), limiting movement of the output rod (20) in the first axial direction (D1; D2).

## Description

### TECHNICAL FIELD

The present disclosure relates to linear actuators.

### BACKGROUND

Actuators are used in a wide variety of fields and applications for moving parts or surfaces from one position to another. Actuators are commonly used, for example, in aircraft, for moving flight control surfaces or aircraft parts, doors etc. Many types of actuator are known, including mechanical, hydraulic and electrical actuators and combinations thereof e.g. electro-mechanical actuators, EMAs. A linear actuator typically has an actuator housing, within which an actuator ram or piston rod is located for axial movement relative to the housing. The rod is moved by application of power to one end of the rod. The other end of the rod is connected to a surface or part to be moved.

In some instances, it is desirable to be able to prevent extension and/or retraction of the linear actuator when the motion is not driven by the actuator. For example, when flying under MMEL conditions, it is desirable to be able to guard some flight control linear actuators against extension and retraction.

There is a desire for a reliable mechanism for locking such linear actuators which does not require the use of any additional or separate parts and which is capable of withstanding high loads.

### SUMMARY

According to an aspect of the disclosure, there is provided a linear actuator comprising: an output rod having a longitudinal axis and a distal end; a structure comprising a friction surface radially spaced from the output rod, wherein the output rod is configured for extension and retraction in an axial direction relative to the structure; an input rod for driving movement of the output rod, wherein the input rod is axially moveable relative to the output rod; and a locking element comprising: a brake portion arranged between the friction surface and the output rod; and an inclined surface, wherein the locking element is axially moveable relative to the output rod, wherein when the input rod is moved in a first axial direction relative to the structure, the input rod contacts the locking element so as to drive the output rod in the first axial direction, and wherein when an external load acts on the distal end of the output rod in the first axial direction, an engagement feature of the output rod is pushed against the inclined surface of the locking element so as to wedge the brake portion of the locking element against the friction surface, limiting movement of the output rod in the first axial direction.

The linear actuator may further comprise a plurality of locking elements. Each locking element from the plurality of locking elements may comprise: a brake portion arranged between the friction surface and the output rod; and an inclined surface. Each locking element may be axially moveable relative to the output rod. When the input rod is moved in the first axial direction relative to the structure, the input rod may contact each of the plurality of locking elements so as to drive the output rod in the first axial direction. When the external load acts on the distal end of the output rod in the first axial direction, an engagement feature of the output rod may be pushed against the inclined surface of each locking element of the plurality of locking elements so as to wedge the brake portion of each respective locking element against the friction surface, limiting movement of the output rod in the first axial direction.

The engagement feature of the output rod may be configured to be pushed against the inclined surface of each locking element of the plurality of locking elements so as to wedge the brake portion of each respective locking element against the friction surface, limiting movement of the output rod in the first axial direction.

Alternatively, a plurality of engagement features may be provided on the output rod. The number of engagement features may correspond to the number of locking elements. Each engagement feature of the plurality of engagement features may be configured to be pushed against the inclined surface of a respective locking element of the plurality of locking elements so as to wedge the brake portion of each respective locking element against the friction surface, limiting movement of the output rod in the first axial direction.

The plurality of locking elements may be spaced from one another. The plurality of locking elements may be evenly spaced from one another. The plurality of locking elements may be arranged circumferentially. The plurality of locking elements may be axially aligned with each other.

The plurality of locking elements may comprise three locking elements.

The linear actuator may further comprise a biasing member. The biasing member may bias the locking element or the plurality of locking elements towards the engagement feature or the respective engagement features of the output rod.

The or each engagement feature may comprise an inclined surface.

The locking element may be a first locking element or the plurality of locking elements may be a plurality of first locking elements. The linear actuator may further comprise a second locking element or a plurality of second locking elements. Each second locking element may comprise: a brake portion arranged between the friction surface and the output rod; and an inclined surface. The or each second locking element is axially moveable relative to the output rod. When the input rod is moved in a second axial direction, the input rod may contact the or each second locking element so as to drive the output rod in the second axial direction. When an external load acts on the distal end of the output rod in the second axial direction, a second engagement feature of the output rod may be pushed against the inclined surface of the or each second locking element so as to wedge the brake portion of the or each second locking element against the friction surface, limiting movement of the output rod in the second axial direction.

The plurality of first locking elements may be spaced from one another. The plurality of first locking elements may be evenly spaced from one another. The plurality of first locking elements may be arranged circumferentially. The plurality of first locking elements may be axially aligned with each other. The plurality of first locking elements may comprise three first locking elements.

The plurality of second locking elements may be spaced from one another. The plurality of second locking elements may be evenly spaced from one another. The plurality of second locking elements may be arranged circumferentially. The plurality of second locking elements may be axially aligned with each other. The plurality of second locking elements may comprise three second locking elements.

The second locking element or the plurality of second locking elements may be axially spaced from the first locking element or the plurality of first locking elements.

The linear actuator may further comprise a second biasing member. The second biasing member may bias the second locking element or the plurality of second locking elements towards the respective second engagement feature of the output rod.

The or each second engagement feature may comprise comprises an inclined surface.

The or each locking element may comprise a coupling portion extending into a respective aperture in the output rod, wherein the coupling portion is axially moveable within the aperture. The or each first locking element may comprise a coupling portion extending into a respective aperture in the output rod, wherein the coupling portion is axially moveable within the aperture. The or each second locking element may comprise a coupling portion extending into a respective aperture in the output rod, wherein the coupling portion is axially moveable within the aperture.

The input rod may be arranged such that when the input rod is moved in the first axial direction, the input rod comes into contact with the coupling portion of the or each first locking element, and such that when the input rod is moved in the second axial direction, the input rod comes into contact with the coupling portion of the or each second locking element.

The linear actuator may further comprise a housing. The structure comprising the friction surface may be part of the housing. The input rod may be moveable within the output rod.

The linear actuator may be an electromechanical actuator.

According to an aspect of the disclosure, there is provided an aircraft comprising a flight control surface and a linear actuator as described above, wherein the distal end of the output rod is connected to the flight control surface.

### BRIEF DESCTOPTION OF DRAWINGS

Certain examples of the disclosure will now be described by way of example only and with reference to the accompanying drawings in which:
FIG. 1 shows a schematic sectional representation of an actuator according to an example;
FIG. 2 shows an axial cross-section through the actuator of FIG. 1 along section line A-A;
FIG. 3 shows an enlarged view of part of the actuator of FIG. 1;
FIG. 4 shows a schematic representation of an actuator, such as the actuator of FIG. 1, when assembled on an aircraft;
FIG. 5 shows a schematic representation of part of the actuator of FIG. 1 according to an example;
FIG. 6 shows a schematic representation of part of the actuator of FIG. 1 according to an example;
FIG. 7 shows a schematic representation of part of the actuator of FIG. 1 according to an example; and
FIG. 8 shows a schematic representation of part of the actuator of FIG. 1 according to an example.

### DETAILED DESRIPTION

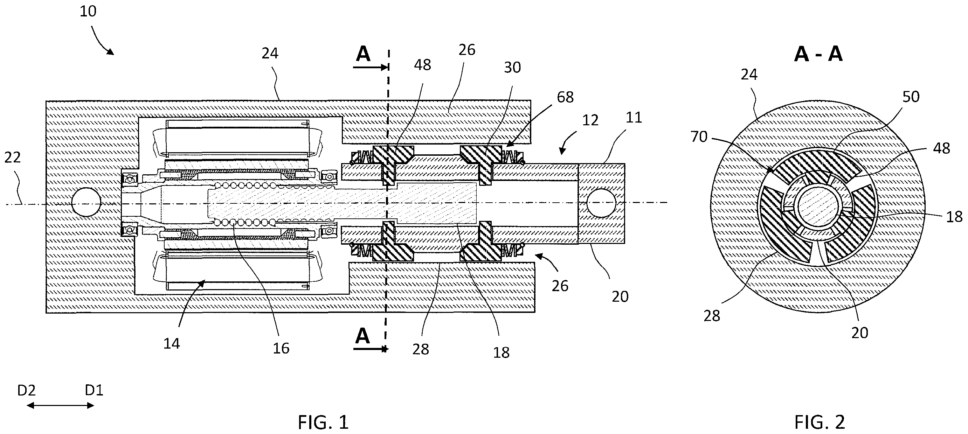

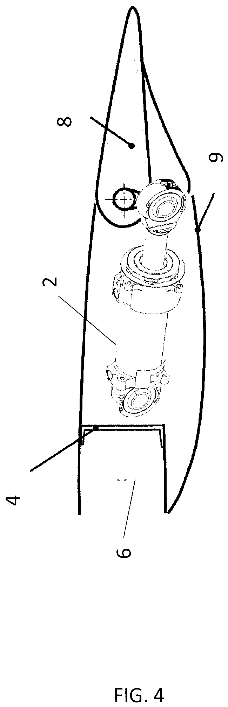

An exemplary linear actuator 10 is shown in FIG. 1. The linear actuator 10 may be a linear actuator for use in an aircraft (not shown). The linear actuator 10 may actuate a primary flight control surface (such as an aileron, a rudder or a stabilizer) or a secondary flight control surface (such as a spoiler, a flap or a slat). An exemplary application of the linear actuator 10 is schematically shown in FIG. 4. In this example, the linear actuator 10 is mounted between a rear spar 4 on an aircraft wing box 6 and a control surface 8. The linear actuator 10 may be configured to move the control surface 8. A fairing 9 may be provided adjacent the control surface 8.

The linear actuator 10 may be configured to convert an electrical, pneumatic or hydraulic input into linear displacement of a piston rod 12. In the example shown, the linear actuator 10 is an electromechanical actuator. However, the disclosure is also applicable to other types of actuator (e.g. a hydraulic actuator). In the example shown, the linear actuator 10 comprises an electric motor 14 configured to produce rotary motion from an electrical input. The linear actuator 10 further comprises a drive mechanism 16, such as a leadscrew or a ball screw, configured to convert the rotary motion of the electric motor 14 into linear displacement of the piston rod 12. An end (a distal end) 11 of the piston rod 12 is configured to be coupled to an external component to be actuated, for example a primary or a secondary flight control surface such as control surface 8 described above. The piston rod 12 is moved by the drive mechanism 16 of the linear actuator 10 to extend and retract so as to actuate the external component.

In any example, the piston rod 12 comprises an input rod 18 and an output rod 20. The input rod 18 is coupled to the output rod 20. The input rod 18 and the output rod 20 are provided as separate components and are moveable in relation to one another. The output rod 20 has a longitudinal axis 22. The output rod 20 is axially moveable along the longitudinal axis 22. Movement of the output rod 20 may be in a first direction along the longitudinal axis 22 (a first axial direction D1) or in a second direction along the longitudinal axis 22 (a second axial direction D2). The second axial direction is opposite to the first axial direction.

The input rod 18 may have a longitudinal axis (not shown). The longitudinal axis of the input rod may coincide with the longitudinal axis 22 of the output rod 22. The input rod 18 and the output rod 22 may be coaxial. The input rod 18 may be axially moveable along the longitudinal axis 22. Movement of the input rod 18 may be in the first direction along the longitudinal axis 22 (the first axial direction D1) or in the second direction along the longitudinal axis 22 (the second axial direction D2). The input rod 18 may be configured to slide along a surface of the output rod 20. The output rod 20 may be configured to slide along a surface of the input rod 18. The input rod 18 and the output rod 20 may form a telescopic arrangement, wherein the input rod 18 and the output rod 20 comprise concentric tubular sections configured to slide into one another.

The input rod 18 is operatively coupled to the drive mechanism 16 of the linear actuator 10. The input rod 18 is configured to selectively couple to the output rod 20 so as to drive extension and retraction of the output rod 20 (or said otherwise, to drive axial movement of the output rod 20 along the longitudinal axis 22). The linear actuator 10 is configured such that the linear motion of the input rod 18 is imparted onto the output rod 20. The distal end 11 of the piston rod 12 is defined by the output rod 20. The distal end 11 is configured to be attached to an external component. The external component may comprise a primary or a secondary flight control surface such as control surface 8 described above.

In the example shown, the linear actuator 10 comprises a housing 24. The housing 24 may be cylindrical. The housing 24 encloses and protects at least part of the input rod 18 and the output rod 20, amongst other components of the linear actuator 10. The output rod 20 may protrude or partially protrude through an opening 26 in the housing 24. The housing 24 is configured to be mounted or otherwise fixed to an external structure (not shown), such as an aircraft. The linear actuator 10 may be configured to actuate or move an external component in relation to the external structure. In the example of FIG. 4, the linear actuator 10 is mounted to the rear spar 4 of an aircraft and is attached to the control surface 8 so as to actuate movement of the control surface 8 relative to the rear spar 4.

In any example, the linear actuator 10 comprises a structure 26. The structure 26 comprises a friction surface 28. The friction surface 28 is radially spaced from the output rod 20. The friction surface 28 may extend approximately parallel to the output rod 20 and / or the longitudinal axis 22. The friction surface 28 may be spaced radially inward or radially outward from the output rod 20 depending on the configuration of the linear actuator 10. The input rod 18 may be provided radially inward or radially outward from the output rod 20 depending on the configuration of the actuator. Herein, the term "radially" is used to denote a direction away from or towards the longitudinal axis 22 of the output rod 20 and approximately perpendicular thereto. In the example shown, the structure 26 forms part of the housing 24 of the linear actuator 10. The friction surface 28 is spaced radially outward from the output rod 20. The friction surface 28 may comprise an inner surface of the housing 24.

The input rod 18 and the output rod 20 are moveable in relation to the structure 26. The output rod 20 is moveable in the first axial direction D1 along the longitudinal axis 22 to extend the output rod 20 relative to the structure 26. The output rod 20 is moveable in the second axial direction D2 along the longitudinal axis 22 to retract the output rod 20 relative to the structure 26. Extension of the output rod 20 may correspond to movement of the output rod 20 in a direction away from the housing 24, while retraction of the output rod 20 may correspond to movement of the output rod 20 in a direction toward the housing 24. The output rod 20 may be moveable along the longitudinal axis 22 between a fully retracted position and a fully extended position.

The input rod 18, the output rod 20 and the housing 24 may be tubular or cylindrical. In the example shown, the output rod 20 is arranged between the input rod 18 and the housing 24. The output rod 20 is arranged radially inward from the housing 24. The input rod 18 is arranged radially inward from the output rod 20. The input rod 18 is moveable within the output rod 20. However, other configurations are envisaged.

In any example, the linear actuator 10 comprises at least one locking element. The at least one locking element is configured to limit movement of the output rod 20 in one of the first or second axial directions D1, D2 when the movement is being caused by an external load. The external load is a force applied by an external source and acts on the distal end 11 of the output rod 20. The force may be a pushing or a pulling force acting on a component to which the output rod 20 of the linear actuator 10 is connected and configured to actuate. The pushing or pulling force may be due to friction, gravity or any other force acting on the component. For example, the external load may be due to air resistance acting upon a secondary flight control surface connected to the linear actuator during flight of an aircraft. In various applications, it is important to prevent such an external load from reversing the motion of the linear actuator 10 (e.g. reversing extension of the output rod 20 or vice versa). The locking element is configured to act as a brake that engages with the friction surface 28 when the output rod 20 is moved by an external load so as to arrest movement of the output rod 20. The locking element acts as a passive brake, which does not require manual input from an operator or continuous input from the motor 14 to activate. The linear actuator 10 can therefore be maintained in a desired state (e.g. extension or retraction) while the motor 14 is switched off, preventing overheating of the motor 14 and reducing energy consumption.

In the example shown, the linear actuator 10 comprises a first locking element 30. The linear actuator 10 may comprise a plurality of first locking elements 30, as will be described further below. In the example shown, the linear actuator 10 comprises three first locking elements 30.

The first locking element 30 is configured to limit extension of the output rod 20 when the movement of the output rod 20 is caused by an external load acting on the distal end 11 of the output rod 20. The first locking element 30 is also configured to allow extension of the output rod 20 when the movement of the output rod 20 is driven by the input rod 18. In other words, the first locking element 30 is configured to limit movement of the output rod 20 in the first direction D1 along the longitudinal axis 22 when the movement of the output rod 20 is caused by an external load acting on the output rod 20 and to allow movement of the output rod 20 in the first direction D1 along the longitudinal axis 22 when the movement of the output rod 20 is driven by the input rod 18. The first locking element 30 is axially moveable relative to the output rod 20.

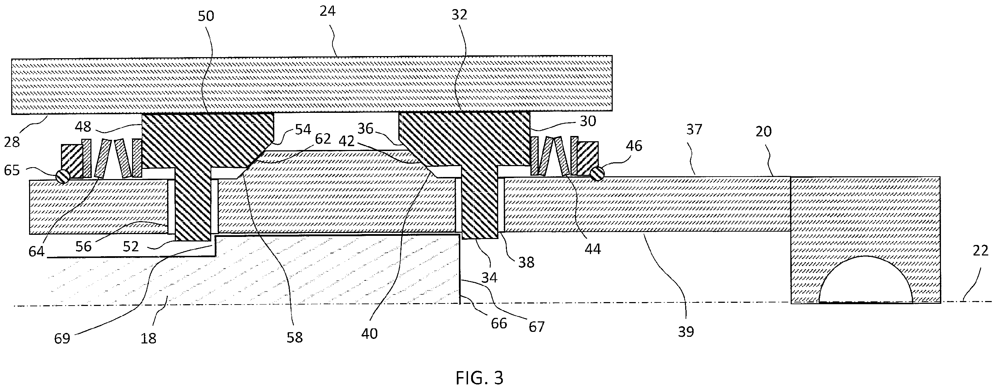

The first locking element 30 is configured to couple the input rod 18 and the output rod 20 to allow extension of the output rod 20 when the movement of the output rod 20 is driven by the input rod 18. The first locking element 30 may comprise a coupling portion 34 as shown in Fig. 3. The coupling portion 34 may be arranged so as to engage the output rod 20 when the input rod 18 is moved in the first axial direction D1. The coupling portion 34 may be arranged so as to engage the output rod 20 when the input rod 18 is moved in the first axial direction or the second axial direction by coming into abutment with a feature of the output rod 20 configured to restrict further movement of the coupling portion 34 relative to the output rod 20 into the first axial direction D1.

Various configurations of the coupling portion 34 are possible, depending on the configuration of the linear actuator 10. In examples, the coupling portion 34 may be received into and/or through a feature of the output rod 20. In the example shown, the output rod 20 comprises a first aperture 38 through which the coupling portion 34 is received. The first aperture 38 is a through hole in the output rod 20. The first aperture 38 extends from an outer surface 37 of the contact rod 20 to an inner surface 39 of the output rod 20. The coupling portion 34 is loosely received into the first aperture 38 such that axial movement of the first locking element 30 in relation to the output rod 20 is possible. The aperture is dimensioned to enable the coupling portion 34 of the first locking element 30 to be received through the first aperture 38. When the input rod 18 is moved in the first axial direction D1, the locking element 30 is moved axially in relation to the output rod 20 until the coupling portion 34 abuts a side of the aperture 38. Further movement of the input rod 18 is thereafter transferred to the output rod 20 via the first locking element 30. In other examples, the output rod 20 may be provided with a recessed portion (not shown) instead of the aperture 38 and the coupling portion 34 may be received into the recessed portion. In such examples, the coupling portion 34 may couple the input rod 18 and the output rod 20 when the coupling portion 34 comes into abutment with a side of the recessed portion. In a further set of examples, the coupling portion 34 may be configured to abut a protrusion (not shown) of the output rod 20 so as to couple the input rod 18 and the output rod 20.

In any example, the first locking element 30 comprises a brake portion 32 and an inclined surface 36. The brake portion 32 is arranged between the friction surface 28 and the output rod 20. The brake portion 32 is configured to contact or to come into contact with the friction surface 28. The inclined surface 36 is configured to contact or to come into contact with a first engagement feature 40 of the output rod 20. The inclined surface 36 is inclined in relation to the longitudinal axis 22. The inclined surface 36 may be inclined at an angle in relation to the longitudinal axis 22. The inclined surface 36 may be formed as a chamfer, a bevel or a shoulder in the first locking element 30.

The output rod 20 comprises the first engagement feature 40. The first engagement feature 40 is configured to engage the inclined surface 38 of the locking element 30 when the output rod 20 is moved in the first axial direction D1 by an external load acting on the distal end 11. The engagement feature 40 is configured to engage with the inclined surface 38 so as to push the brake portion 32 of the locking element 30 radially towards the friction surface 28. The engagement feature 40 may force the locking element 30 towards the friction surface 28. The locking element 30 may be driven in the space between the structure 26 and the engagement feature 40 as the output rod 20 moves in relation to the locking element 30.

In the example shown, the first engagement feature 40 comprises an engagement feature inclined surface 42. The engagement feature inclined surface 42 may be inclined in relation to the longitudinal axis 22 of the output rod 20. The engagement feature inclined surface 42 may be inclined at an angle in relation to the longitudinal axis 22 so as to be parallel or approximately parallel to the inclined surface 36. The engagement feature inclined surface 42 of the output rod 20 may face the inclined surface 36 of the first locking element 30. The inclined surface 42 of the output rod 20 may be configured to engage with the inclined surface 36 of the first locking element 30. In the example shown, the first engagement feature 40 comprises an angled shoulder provided on the output rod 20. The angled shoulder may be provided on the outer surface 37 of the output rod 20. The first engagement feature 40 may be an integral feature of the output rod 20. However, other configurations are envisaged. For example, the first engagement feature 40 may be provided as a separate component to the output rod 20 and may be permanently or releasably fixed to the output rod 20. In examples, the first engagement feature 40 may comprise a curved surface instead of an inclined surface. In examples, the first engagement feature 40 may comprise a rounded edge, a chamfer or a bevel provided on the output rod 20.

The first locking element 30 may be biased towards the first engagement feature 40 by a first biasing member 44. The first biasing member 44 may be a spring, such as a wave spring. The first biasing member 44 may bias the inclined surface 36 of the first locking element 30 into contact with the engagement feature inclined surface 42 of the output rod 20. The first biasing member 44 may be positioned on the outer surface of the outer rod 20. The biasing member 44 may be secured into position by a fastener, such as a first snap ring 46.

When the output rod 20 is moved in the first axial direction D1 relative to the structure 26 by an external load acting on the distal end 11 of the output rod 20, the first engagement feature 40 of the output rod 20 is pushed against the inclined surface 36 of the first locking element 30 so as to wedge the brake portion 32 of the first locking element 30 against the friction surface 28, thus limiting movement of the output rod 20 in the first direction D1. The inclined surface 36 of the first locking element 30 converts the force applied by the external load to move the output rod 20 axially into a radial force that presses the brake portion 32 of the first locking element 30 against the friction surface 28, generating sufficient friction to arrest further movement of the output rod 20 in the first direction D1.

In the example shown, the linear actuator 10 comprises a second locking element 48. The linear actuator 10 may comprise a plurality of second locking elements 48, as will be described further below. In the example shown, the linear actuator 10 comprises three second locking elements 48.

The second locking element 48 is configured to limit retraction of the output rod 20 when the movement of the output rod 20 is caused by an external load acting on the distal end 11 of the output rod 20. The second locking element 48 is also configured to allow retraction of the output rod 20 when the movement of the output rod 20 is driven by the input rod 18. In other words, the second locking element 48 is configured to limit movement of the output rod 20 in the second direction D2 along the longitudinal axis 22 when the movement of the output rod 20 is caused by an external load acting on the output rod 20 and to allow movement of the output rod 20 in the second direction D2 along the longitudinal axis 22 when the movement of the output rod 20 is driven by the input rod 18. The second locking element 48 is axially moveable relative to the output rod 20.

The second locking element 48 is configured to couple the input rod 18 and the output rod 20 to allow retraction of the output rod 20 when the movement of the output rod 20 is driven by the input rod 18. The second locking element 48 may comprise a coupling portion 52. The coupling portion 52 may be arranged so as to engage the output rod 20 when the input rod 18 is moved in the second axial direction D2. The coupling portion 52 may be arranged so as to engage the output rod 20 when the input rod 18 is moved in the second axial direction D2 by coming into abutment with a feature of the output rod 20 configured to restrict further movement of the coupling portion 52 relative to the output rod 20 in the second axial direction D2.

Various configurations of the coupling portion 52 are possible, depending on the configuration of the linear actuator 10. In examples, the coupling portion 52 may be received into and/or through a feature of the output rod 20. In the example shown, the output rod 20 comprises a second aperture 56 through which the coupling portion 52 is received. The second aperture 56 is a through hole in the output rod 20. The second aperture 56 extends from the outer surface 37 of the contact rod 20 to the inner surface 39 of the output rod 20. The coupling portion 52 is loosely received into the second aperture 56 such that axial movement of the second locking element 48 in relation to the output rod 20 is possible. The second aperture 56 is dimensioned to enable the coupling portion 52 of the second locking element 48 to be received through the second aperture 56. When the input rod 18 is moved in the second axial direction D2, the locking element 48 is moved axially in relation to the output rod 20 until the coupling portion 52 abuts a side of the aperture 56. Further movement of the input rod 18 is thereafter transferred to the output rod 20 via the locking element 48. In other examples, the output rod 20 may be provided with a recessed portion (not shown) instead of the aperture 56 and the coupling portion 52 may be received into the recessed portion. In such examples, the coupling portion 52 may couple the input rod 18 and the output rod 20 when the coupling portion 34 comes into abutment with a side of the recessed portion. In a further set of examples, the coupling portion 52 may be configured to abut a protrusion (not shown) of the output rod 20 so as to couple the input rod 18 and the output rod 20.

In any example, the second locking element 48 comprises a brake portion 50 and an inclined surface 54. The brake portion 50 is arranged between the friction surface 28 and the output rod 20. The brake portion 50 is configured to contact or to come into contact with the friction surface 28. The inclined surface 54 is configured to contact or to come into contact with a second engagement feature 58 of the output rod 20. The inclined surface 54 is inclined in relation to the longitudinal axis 22. The inclined surface 54 may be inclined at an angle in relation to the longitudinal axis 22. The inclined surface 54 may be formed as a chamfer, a bevel, or a shoulder in the second locking element 48.

The output rod 20 comprises the second engagement feature 58. The second engagement feature 58 is configured to engage the inclined surface 54 of the second locking element 48 when the output rod 20 is moved in the second axial direction D2 by an external load acting on the distal end 11 of the output rod 20. The second engagement feature 58 is configured to engage with the inclined surface 54 so as to displace the brake portion 50 of the second locking element 48 radially towards the friction surface 28. The second engagement feature 58 may force the second locking element 48 towards the friction surface 28. The second locking element 48 may be driven in the space between the structure 26 and the second engagement feature 58 as the output rod 20 moves in relation to the locking element 30.

In the example shown, the second engagement feature 58 comprises a second engagement feature inclined surface 62. The second engagement feature inclined surface 62 may be inclined in relation to the longitudinal axis 22 of the output rod 20. The second engagement feature inclined surface 62 may be inclined at an angle in relation to the longitudinal axis 22 so as to be parallel or approximately parallel to the inclined surface 54. The second engagement feature inclined surface 62 of the output rod 20 may face the inclined surface 54 of the second locking element 30. The second engagement feature inclined surface 62 of the output rod 20 may be configured to engage with the inclined surface 54 of the second locking element 48. In the example shown, the second engagement feature 58 comprises an angled shoulder provided on the output rod 20. The angled shoulder may be provided on the outer surface 37 of the output rod 20. The second engagement feature 58 may be an integral feature of the output rod 20. However, other configurations are envisaged. For example, the second engagement feature 58 may be provided as a separate component to the output rod 20 and may be permanently or releasably fixed to the output rod 20. In examples, the second engagement feature 58 may comprise a curved surface instead of an inclined surface. In examples, the second engagement feature 58 may comprise a rounded edge, a chamfer or a bevel provided on the output rod.

The second locking element 48 may be biased towards the second engagement feature 58 by a second biasing member 64. The second biasing member 64 may be a spring, such as a wave spring. The second biasing member 64 may bias the inclined surface 54 of the second locking element 48 into contact with the second engagement feature inclined surface 62 of the output rod 20. The second biasing member 64 may be positioned on the outer surface of the outer rod 20. The second biasing member 64 may be secured into position by fastener, such as a second snap ring 65.

When the output rod 20 is moved axially in the second axial direction D2 relative to the structure 26 by an external load acting on the distal end 11 of the output rod 20, the second engagement feature 58 of the output rod 20 is pushed against the inclined surface 54 of the second locking element 48 so as to wedge the brake portion 50 of the second locking element 48 against the friction surface 28, limiting movement of the output rod 20 in the second direction D2. The inclined surface 54 of the second locking element 48 converts the force applied by the external load to move the output rod 20 axially into a radial force that presses the brake portion 50 of the second locking element 48 against the friction surface 28, generating sufficient friction to arrest further movement of the output rod 20 in the second direction D2.

The first locking element 30 and the second locking element 48 may have identical but mirrored configurations. The first and second locking elements 30, 48 may be spaced axially from one another. A control portion 66 of the input rod 18 may be positioned between the first and the second locking element 30, 48 such that when the input rod 18 is moved in the first direction D1, the control portion 66 of the input rod 18 (in the example shown, a first radial end wall 67 of the control portion 66) engages the first locking element 30; and when the input rod 18 is moved in the second direction D2, the control portion 66 of the input rod 18 (in the example shown, a second, opposite radial end wall 69 of the control portion 66) engages the second locking element 48. In the example shown, the control portion 66 of the input rod 18 has a larger diameter than the remainder of the input rod 18, however this is just one possible configuration. For example, the control portion 66 of the input rod 18 may be provided as a shoulder, a protrusion or a rib on the input rod 18.

In the example shown, the first locking element 30 is part of a first locking arrangement 68. The first locking arrangement 68 may comprise a plurality of first locking elements arranged circumferentially. The plurality of first locking elements may be evenly spaced from one another in a circumferential direction as seen in Fig. 2 for example. The plurality of first locking elements may be axially aligned with each other. Each first locking element may be axially moveable relative to the output rod 20. Each first locking element may be axially fixed relative to the others of the plurality of first locking elements. Each first locking element in the plurality of first locking elements may have an identical configuration, a detailed description is thus omitted. The plurality of first locking elements may all be configured to limit extension of the output rod 20 when the movement of the output rod 20 is caused by an external load by wedging the brake portion of each first locking element against the friction surface 28 when the output rod 20 is moved axially by an external load in the first direction, limiting movement of the output rod 20 in the first direction. In examples, the first engagement feature 40 of the output rod 20 may be configured to engage with each of the first locking elements so as to push each respective brake portion into contact with the friction surface 28. The first engagement feature 40 may be provided as a continuous feature on the output rod 20. In other examples, a plurality of first engagement features may be provided, with each engagement feature being configured to engage a respective locking element. The output rod 20 may comprise a plurality of first apertures 38, with each first aperture 38 being configured to receive a respective coupling portion of a respective locking element. Each respective locking element may be configured to move axially in relation to the output rod 20.

The second locking element 48 may be part of a second locking arrangement 70. The second locking arrangement 70 may be axially spaced from the first locking arrangement 68. The second locking arrangement 70 may comprise a plurality of second locking elements arranged circumferentially. The plurality of second locking elements may be evenly spaced from one another in a circumferential direction. The plurality of second locking elements may be axially aligned with each other. Each second locking element may be axially moveable relative to the output rod 20. Each second locking element may be axially fixed relative to the others of the plurality of second locking elements. Each second locking element in the plurality of locking elements may have an identical configuration, a detailed description is thus omitted. In other words, the plurality of second locking elements may all be configured to limit retraction of the output rod 20 when the movement of the output rod 20 is caused by an external load by wedging the brake portion of each second locking element against the friction surface 28 when the output rod 20 is moved axially by an external load in the second direction, limiting movement of the output rod 20 in the second direction. In examples, the second engagement feature 58 of the output rod 20 may be configured to engage with each of the second locking elements so as to push each respective brake portion into contact with the friction surface 28. The second engagement feature 58 may be provided as a continuous feature on the output rod 20. In other examples, a plurality of second engagement features may be provided, with each engagement feature being configured to engage a respective locking element. The output rod 20 may comprise a plurality of second apertures 56, with each second aperture 56 being configured to receive a respective coupling portion of a respective locking element. Each respective locking element may be configured to move axially in relation to the output rod 20.

While the exemplary linear actuator 10 has been shown as having a first locking arrangement 68 comprising three first locking elements and a second locking arrangement 70 comprising three second locking elements, it will be understood that various modifications are possible. In examples, the linear actuator can comprise only one of the first locking arrangement 68 or the second locking arrangement 70 and may thus be configured to only limit one of extension or retraction of the output rod 20. In examples, the first locking arrangement 68 and/or the second locking arrangement 70 may comprise a different number of locking elements than shown. In examples, the linear actuator 10 may comprise a single first locking element 30 and/or a single second locking element 48.

The operation of the linear actuator 10 will now be described. For the sake of conciseness, the operation of the linear actuator 10 has been described with reference to a single first locking element 30 and a single second locking element 48.

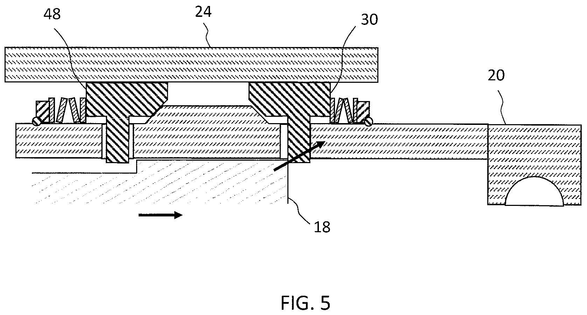

FIG. 5 shows linear actuator 10 during active extension. Herein, active extension is used the describe the state of the linear actuator 10 during which the output rod 20 is driven by the input rod 18 so as to move in the first axial direction D1. The linear actuator 10 is operated to actuate movement of the input rod 18 in the first direction D1. The input rod 18 moves in the first direction D1 and the control portion 66 of the input rod 18 engages the coupling portion 34 of the first locking element 30. As the input rod 18 moves in the first direction D1, the control portion 66 of the input rod 18 moves away from the coupling portion 52 of the second locking element 48. As the input rod 18 continues to move in the first direction D1, the first locking element 30 is pushed by the control portion 66 of the input rod 18 against the outer rod 20. The input rod 18 is thus coupled to the output rod 20 through the first locking element 30. The axial motion of the input rod 18 in the first direction D1 is transferred to the output rod 20 through the first locking element 30. In this regard, when the input rod 18 is driving the extension of the output rod 20, movement of the output rod 20 in the first direction D1 is allowed. It will be understood that movement of the first locking element 30 in the first direction D1 is limited by the extent or width of the first aperture 38 within which the coupling portion 34 of the first locking element 30 is received. The force applied by the input rod 18 to move the first locking element 30 in the first direction D1 and within the first aperture 38 overcomes the force applied by the first biasing member 44 to bias the first locking element 30 in the second direction D2. The first biasing member 44 is compressed as the input rod 18 engages with and pushes against the coupling portion 34 of the first locking element 30. As the first locking element 30 is moved in the first direction D1 within the first aperture 38, the inclined surface 36 of the first locking element 30 moves away from the first engagement feature 40.

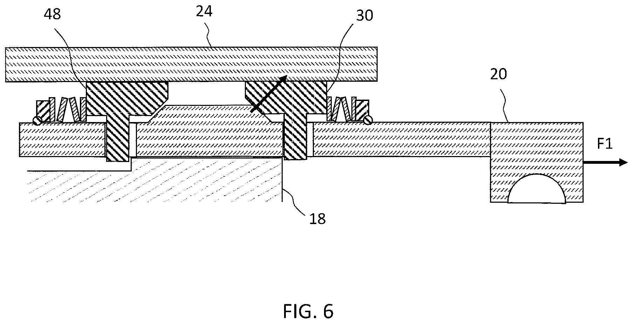

FIG. 6 shows the linear actuator 10 during passive extension. Herein, passive extension is used the describe the state of the linear actuator 10 during which an external load F1 acts on the output rod 20 in the first direction D1. The output rod 20 is moved in the first direction D1 under the application of the external load F1. As the output rod 20 is moved in the first direction D1, the first engagement feature 40 of the output rod 20 comes into contact with the inclined surface 36 of the first locking element 30 so as to wedge the brake portion 32 against the friction surface 28, limiting further movement of the output rod 20 in the first direction D1. It will be understood that movement of the output rod 20 is not transferred to the input rod 18.

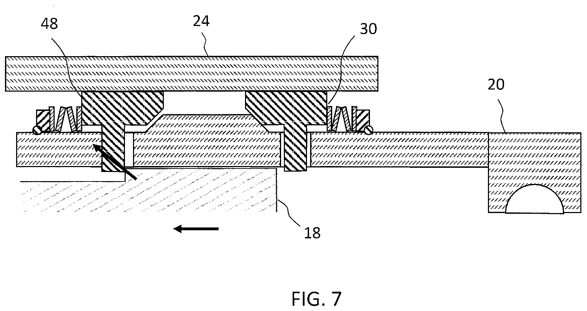

FIG. 7 shows the linear actuator 10 during active retraction. Herein, active retraction is used the describe the state of the linear actuator 10 during which the output rod 20 is driven by the input rod 18 so as to move in the second axial direction D2. The linear actuator 10 is operated to actuate movement of the input rod 18 in the second direction D2. The input rod 18 moves in the second direction D2 and the control portion 66 of the input rod 18 engages the coupling portion 52 of the second locking element 48. As the input rod 18 moves in the second direction D2, the control portion 55 of the input rod 18 moves away from the coupling portion 34 of the first locking element 30. As the input rod 18 continues to move in the second direction D2, the second locking element 48 is pushed by the control portion 66 of the input rod 18 against the outer rod 20. The input rod 18 is thus coupled to the output rod 20 through the second locking element 38. The axial motion of the input rod 18 in the second direction D2 is transferred to the output rod 20 through the second locking element 48. In this regard, when the input rod 18 is driving the retraction of the output rod 20, movement of the output rod 20 in the second direction D2 is allowed. It will be understood that movement of the second locking element 48 in the second direction is limited to the extent or width of the second aperture 56 within which the coupling portion 52 of the second locking element 48 is received. The force applied by the input rod 18 to move the second locking element 48 in the second direction D2 and within the second aperture 56 overcomes the force applied by the second biasing member 64 to bias the second locking element 48 in the first direction D1. The second biasing member 64 is compressed as the input rod 18 engages with and pushes against the coupling portion 52 of the second locking element 48. As the second locking element 48 is moved in the second direction D2 within the second aperture 56, the inclined surface 54 of the second locking element 48 moves away from the second engagement feature 58.

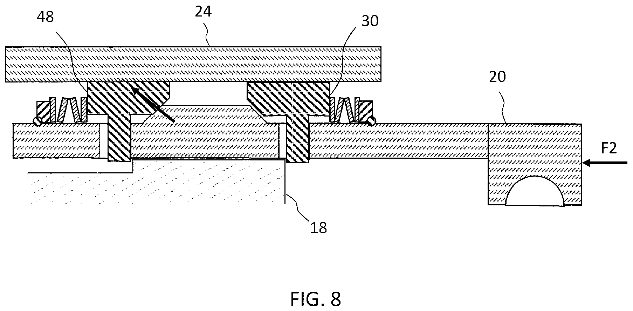

FIG. 8 shows the linear actuator 10 during passive extension. Herein, passive extension is used the describe the state of the linear actuator 10 during which an external load F2 acts on the output rod 20 in the second direction D2. The output rod 20 is moved in the second direction D2 under the application of the external load F2. As the output rod 20 is moved in the second direction D2, the second engagement feature 48 of the output rod 20 comes into contact with the inclined surface 54 of the second locking element 48 so as to wedge the brake portion 50 against the friction surface 28, limiting further movement of the output rod 20 in the second direction D2. It will be understood that movement of the output rod 20 is not transferred to the input rod 18.

While in the above example the structure 26 comprising the friction surface 28 is provided as part of the housing 24 of the linear actuator 10, alternative arrangements are envisaged. In examples, the input rod 18 of the linear actuator 10 may be arranged between the housing 24 and the output rod 20. In these examples, the structure 26 comprising the friction surface 28 may be arranged radially inward from the output rod 18. The input rod 18 may by moveable slideably around the output rod 20.

In any example, the input rod 18, the output rod 20, the structure 26 comprising the friction surface 28 and/or the housing 24 may be formed from any suitable metal including steel.

It will be understood that in any example of the disclosure, approximately parallel to may mean extending within -30 degrees and +30 degrees of parallel to, or within - 20 degrees and +20 degrees of parallel to, or within -10 degrees and +10 degrees of parallel to, or within -5 degrees and +5 degrees of parallel to. It will be understood that in any example of the disclosure, approximately perpendicular to may mean extending within -30 degrees and +30 degrees of perpendicular to, or within -20 degrees and +20 degrees of perpendicular to, or within -10 degrees and +10 degrees of perpendicular to, or within -5 degrees and +5 degrees of perpendicular to.

While the disclosure has been described in detail in connection with only a limited number of examples, it should be readily understood that the disclosure is not limited to such disclosed examples. Rather, the disclosure can be modified to incorporate any number of variations, alterations, substitutions, or equivalent arrangements not heretofore described, but which are commensurate with the scope of disclosure. Additionally, while various examples of the disclosure have been described, it is to be understood that aspects of the disclosure may include only some of the described examples. Accordingly, the disclosure is not to be seen as limited by the foregoing description but is only limited by the scope of the appended claims.

## Claims

1. A linear actuator comprising:
an output rod having a longitudinal axis and a distal end;
a structure comprising a friction surface radially spaced from the output rod,
wherein the output rod is configured for extension and retraction in an axial direction relative to the structure;
an input rod for driving movement of the output rod, wherein the input rod is axially moveable relative to the output rod; and
a locking element comprising:
a brake portion arranged between the friction surface and the output rod; and
an inclined surface,
wherein the locking element is axially moveable relative to the output rod,
wherein when the input rod is moved in a first axial direction relative to the structure, the input rod contacts the locking element so as to drive the output rod in the first axial direction, and
wherein when an external load acts on the distal end of the output rod in the first axial direction, an engagement feature of the output rod is pushed against the inclined surface of the locking element so as to wedge the brake portion of the locking element against the friction surface, limiting movement of the output rod in the first axial direction.

2. The linear actuator of claim 1, further comprising a plurality of locking elements, wherein each locking element from the plurality of locking elements comprises:
a brake portion arranged between the friction surface and the output rod;
and
an inclined surface,
wherein each locking element is axially moveable relative to the output rod,
wherein when the input rod is moved in the first axial direction relative to the structure, the input rod contacts each of the plurality of locking elements so as to drive the output rod in the first axial direction, and
wherein when the external load acts on the distal end of the output rod in the first axial direction, an engagement feature of the output rod is pushed against the inclined surface of each locking element of the plurality of locking elements so as to wedge the brake portion of each respective locking element against the friction surface, limiting movement of the output rod in the first axial direction.

3. The linear actuator of claim 2, wherein the plurality of locking elements are spaced from one another, optionally evenly spaced from one another.

4. The linear actuator of claim 2 or 3, wherein the plurality of locking elements are arranged circumferentially, and /or
wherein the plurality of locking elements are axially aligned with each other.

5. The linear actuator of claim 2, 3 or 4, wherein the plurality of locking elements comprises three locking elements.

6. The linear actuator of any of claims 1 to 5, further comprising:
a biasing member, wherein the biasing member biases the locking element or the plurality of locking elements towards the engagement feature or the respective engagement features of the output rod.

7. The linear actuator of any of claims 1 to 6, wherein the or each engagement feature comprises an inclined surface.

8. The linear actuator of any of claims 1 to 7, wherein the locking element is a first locking element or wherein the plurality of locking elements is a plurality of first locking elements, and wherein the linear actuator further comprises a second locking element or a plurality of second locking elements,
wherein each second locking element comprises:
a brake portion arranged between the friction surface and the output rod; and
an inclined surface,
wherein the or each second locking element is axially moveable relative to the output rod,
wherein when the input rod is moved in a second axial direction, the input rod contacts the or each second locking element so as to drive the output rod in the second axial direction, and
wherein when an external load acts on the distal end of the output rod in the second axial direction, a second engagement feature of the output rod is pushed against the inclined surface of the or each second locking element so as to wedge the brake portion of the or each second locking element against the friction surface, limiting movement of the output rod in the second axial direction.

9. The linear actuator of claim 8, wherein the second locking element or the plurality of second locking elements is axially spaced from the first locking element or the plurality of first locking elements.

10. The linear actuator of claim 8 or 9, further comprising:
a second biasing member, wherein the second biasing member biases the second locking element or the plurality of second locking elements towards the respective second engagement feature of the output rod, and / or
wherein the or each second engagement feature comprises an inclined surface.

11. The linear actuator of any preceding claim, wherein the or each locking element comprises a coupling portion extending into a respective aperture in the output rod, wherein the coupling portion is axially moveable within the aperture.

12. The linear actuator of claim 11 when dependent on claim 8, 9 or 10, wherein the input rod is arranged such that when the input rod is moved in the first axial direction, the input rod comes into contact with the coupling portion of the or each first locking element, and such that when the input rod is moved in the second axial direction, the input rod comes into contact with the coupling portion of the or each second locking element.

13. The linear actuator of any preceding claim, further comprising:
a housing,
wherein the structure comprising the friction surface is part of the housing, and
wherein the input rod is moveable within the output rod.

14. The linear actuator of any preceding claim, wherein the linear actuator is an electromechanical actuator.

15. An aircraft comprising a flight control surface and a linear actuator as claimed in any preceding claim, wherein the distal end of the output rod is connected to the flight control surface.
